# FASCICULE DE BREVET EUROPEEN

(11) **EP 0 478 473 B1**
(45) Date de publication et mention de la délivrance du brevet: **05.07.1995**
(21) Numéro de dépôt: 91420327.8
(22) Date de dépôt: 16.09.1991
(51) Int. Cl.: H04N 11/18, H04N 9/64

(54) **Décodeur secam**
Secam Decoder
Secam decoder

(30) Priorité: 18.09.1990 FR 9011826
(43) Date de publication de la demande: 01.04.1992
(73) Titulaire: SGS-THOMSON MICROELECTRONICS S.A., 94250 Gentilly (FR)
(72) Inventeur: Imbert, Michel, F-38180 Seyssins (FR); Bret, Gérard, F-38130 Echirolles (FR)
(74) Mandataire: de Beaumont, Michel

(56) Documents cités:
- EP-A- 0 009 204
- EP-A- 0 222 653
- DE-A- 3 243 014

## Description

La présente invention concerne le domaine des circuits de télévision couleur et, plus particulièrement, un circuit de décodage de chrominance selon la norme SECAM.

Dans le système SECAM, les informations de chrominance sont fournies par modulation de sous-porteuses de chrominance. Deux lignes successives contiennent respectivement des informations R-Y représentatives du rouge, puis des informations B-Y représentatives du bleu. Ces informations sont contenues dans la modulation en fréquence de la sous-porteuse, qui est distincte pour deux lignes successives (4,406 MHz pour le rouge et 4,250 MHz pour le bleu). On dira que le signal comporte une succession de lignes modulées rouges et bleues. Bien entendu, les appellations "ligne rouge" et "ligne bleue" utilisées ici traduisent un souci de simplification et l'on pourra se reporter à tout ouvrage classique sur le système SECAM pour définir de façon précise le contenu des informations de chrominance portées par des lignes successives.

Dans un téléviseur, on aura donc besoin de séparer les lignes bleues et rouges sur deux canaux ne comportant chacun respectivement que des lignes bleues et que des lignes rouges, et de démoduler ces lignes. Selon ce qui précède, on obtient sur chaque canal respectivement, une succession de lignes bleues démodulées et de blancs de la durée d'une ligne (en général 64 microsecondes), et une succession de lignes rouges démodulées et de blancs de la durée d'une ligne. Chacun de ces blancs est ensuite comblé par la ligne bleue ou rouge qui le précède en la retardant de la durée d'une ligne. On obtient ainsi deux canaux qui fournissent respectivement une succession ligne bleue - ligne bleue retardée et une succession ligne rouge - ligne rouge retardée. L'intervalle subsistant entre ces lignes, le retour de ligne, est mis à un niveau de référence (en général nul) représentant le noir. Cet ensemble d'opérations constitue le décodage SECAM.

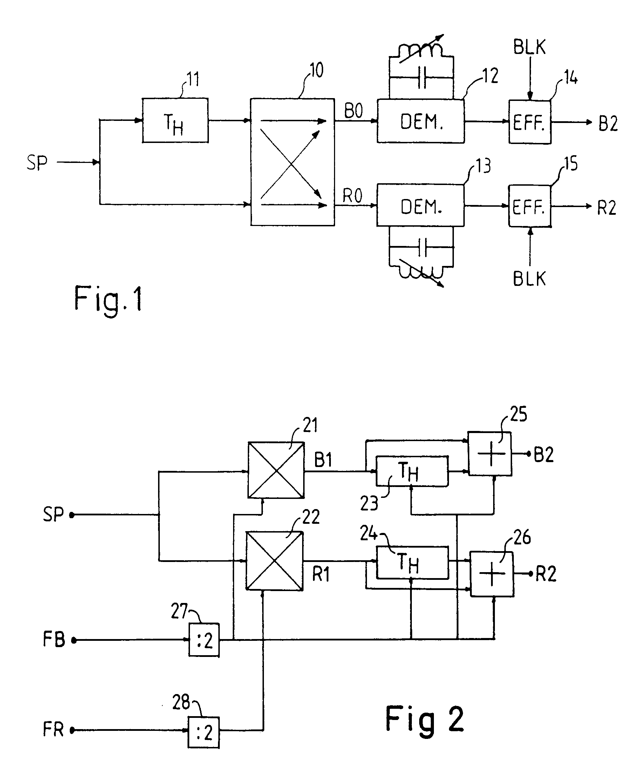

La figure 1 représente un premier décodeur SECAM de l'art antérieur. Un permutateur 10 à deux canaux reçoit sur un canal, direct, la sous-porteuse de chrominance SP et sur un autre canal, retardé, la sous-porteuse SP retardée par une ligne à retard 11 d'une durée de ligne T_{H}. Le permutateur est cadencé par un signal logique de fréquence F_{H}/2 (demi-fréquence ligne) à rapport cyclique de 50%, qui le fait basculer à chaque passage d'une ligne. On obtient sur un premier canal de sortie B0 une succession ligne retardée - ligne directe, qui n'est autre que la succession, par exemple, ligne bleue - ligne bleue retardée, et sur un deuxième canal de sortie R0, une succession ligne directe - ligne retardée, qui n'est autre que la succession, par exemple, ligne rouge - ligne rouge retardée. Ensuite, le canal B0, respectivement R0, passe dans un démodulateur classique 12, respectivement 13, dont la fréquence centrale de démodulation du bleu F_{0_{B}}, respectivement du rouge F_{0_{R}}, est réglée par un circuit LC ajustable. Après démodulation, le signal B0, respectivement R0, passe dans un circuit d'effacement 14, respectivement 15, piloté par un signal d'effacement BLK qui passe à un état actif pendant les retours de ligne pour rétablir le niveau du noir.

Les circuits d'effacement, constitués en général d'un interrupteur analogique annulant le signal de sortie, sont indispensables, surtout après un démodulateur, car le niveau du noir entre les lignes subit en général un décalage du niveau continu involontaire après traitement des lignes. Le permutateur, les démodulateurs et les circuits d'effacement d'un tel décodeur sont en général intégrés en technologie bipolaire dans un même circuit intégré. Autour de ce circuit intégré, il faut par conséquent prévoir une ligne à retard et deux circuits LC non intégrables. La ligne à retard, placée en amont de la démodulation, doit être une ligne à retard haute fréquence car elle doit permettre le passage des fréquences élevées de modulation. Elle est en général constituée d'un cristal de quartz. Le permutateur et les circuits d'effacement sont complexes car il est difficile de réaliser des interrupteurs analogiques en technologie bipolaire.

La figure 2 reprend la figure 1 de la demande de brevet Européen EP-A-0 009 204 qui décrit un décodeur de chrominance essentiellement prévu pour la norme PAL. La sous-porteuse SP est fournie à deux démodulateurs 21 et 22 dont les sorties respectives B1 et R1 sont chacune reliées directement à une entrée et par l'intermédiaire d'une ligne à retard 23, 24 à une autre entrée d'un sommateur 25, 26. Les sorties de ces sommateurs constituent les sorties décodées B2 et R2. Les démodulateurs, les lignes à retard et les sommateurs sont des éléments à transfert de charge ou CCD (du terme anglo-saxon "Charge Coupled Device"). Les éléments CCD 21, 23 et 25 du canal bleu ainsi que les éléments CCD 24 et 26 du canal rouge sont cadencés par la fréquence de référence PAL FB divisée par 2 à travers un diviseur 27. Le démodulateur CCD 22 est cadencé par une fréquence FR divisée par 2 à travers un diviseur 28. La phase du signal FR par rapport à celle du signal FB est commutée entre + et - 90° à chaque passage d'une ligne.

Avec cette configuration, on obtient à la sortie du démodulateur 21 un signal B1 approximativement nul pendant les lignes rouges et comportant les informations bleues démodulées pendant les lignes bleues. De même, à la sortie du démodulateur 22 on retrouve un signal R1 approximativement nul pendant les lignes bleues et comportant les informations rouges démodulées pendant les lignes rouges. Les sommateurs et les lignes à retard permettent de combler les "blancs" en sortie des démodulateurs par les informations démodulées de la ligne précédente.

Un inconvénient de ce circuit est que la sortie des démodulateurs n'est pas parfaitement nulle lorsqu'ils reçoivent une ligne ne leur correspondant pas. Ainsi, à la sortie des sommateurs, les lignes retardées seront combinées avec des informations non nulles constituant un bruit de fond qui peut détériorer l'image. De plus, il faut prévoir à la sortie des sommateurs des circuits d'effacement, comme dans le cas de la figure 1, pour rétablir le niveau du noir pendant les retours de ligne.

La demande de brevet EP-A-0 009 204 prévoit l'utilisation de ce circuit en tant que décodeur SECAM, mais les modifications à faire, notamment les composants supplémentaires à prévoir, sont tellement nombreuses que le décodeur devient inutilement complexe.

Un objet de la présente invention est de prévoir un décodeur SECAM à architecture semblable à celle de la figure 2 ne nécessitant que des signaux externes existants dans un téléviseur.

Un autre objet de la présente invention est de prévoir un décodeur SECAM ne nécessitant ni composants externes, notamment des circuits d'effacement, ni réglages.

Pour atteindre ces objets ainsi que d'autres, la présente invention prévoit un décodeur SECAM comprenant deux démodulateurs recevant une sous-porteuse de chrominance véhiculant des informations correspondant de façon alternée à une ligne bleue et à une ligne rouge, dont les sorties sont chacune reliée directement à une entrée et par l'intermédiaire d'une ligne à retard à une autre entrée d'un sommateur. Les démodulateurs sont à boucle à verrouillage de phase comprenant chacun un comparateur de phase recevant sur une entrée la sous-porteuse, fournissant un courant de commande à un oscillateur commandé en courant et recevant sur une autre entrée le signal de sortie de l'oscillateur ; un moyen résistif disposé dans le trajet du courant de commande, aux bornes duquel est récupérée une tension représentative de la sous-porteuse démodulée ; et un interrupteur en parallèle sur le moyen résistif, cet interrupteur étant ouvert seulement pendant le passage des lignes d'une même couleur.

Selon un mode de réalisation de la présente invention, l'interrupteur est commandé par un signal d'effacement qui est à un niveau logique actif pendant les retours de ligne et les lignes correspondant à l'autre couleur.

Selon un mode de réalisation de la présente invention, en réponse à un signal d'inhibition périodique, le courant de sortie du comparateur est annulé et un courant de réglage est fourni à l'oscillateur.

Selon un mode de réalisation de la présente invention, l'interrupteur est constitué d'au moins un transistor MOS.

Selon un mode de réalisation de la présente invention, le décodeur comprend des moyens pour fournir, lorsque le signal d'inhibition est à un niveau logique prédéterminé, le courant de réglage ayant une première valeur costante correspondant à un réglage au repos de l'oscillateur, et pour fournir, lorsque le signal d'inhibition passe au niveau logique complémentaire du niveau logique prédéterminé, le courant de réglage ayant une deuxième valeur qui est fonction de la différence de phase entre le signal de sortie de l'oscillateur et une fréquence de référence.

Selon un mode de réalisation de la présente invention, lesdits moyens comportent un deuxième comparateur de phase fournissant une tension fonction de la différence de phase entre le signal de sortie de l'oscillateur et une fréquence de référence, et recevant le signal d'inhibition dont le niveau logique complémentaire provoque la suppression de la tension ; un convertisseur tension-courant transformant la tension en un deuxième courant de commande de l'oscillateur ; des moyens pour mémoriser le deuxième courant ; et une source de courant fournissant un courant constant qui commande l'oscillateur quand le signal d'inhibition est au niveau logique prédéterminé.

Selon un mode de réalisation de la présente invention, les moyens pour mémoriser le deuxième courant comprennent une capacité reliée à la sortie du deuxième comparateur et la masse ; et un convertisseur tension-courant connecté entre la sortie du deuxième comparateur et l'entrée de commande de l'oscillateur.

Selon un mode de réalisation de la présente invention, le signal d'inhibition passe au niveau logique complémentaire pendant les retours de trame.

Ces objets, caractéristiques et avantages ainsi que d'autres de la présente invention seront exposés plus en détail dans la description suivante de modes de réalisation particuliers faite en relation avec les figures jointes parmi lesquelles :
les figures 1 et 2 destinées à illustrer l'état de la technique ont été décrites précédemment ;
la figure 3 représente sous forme simplifiée une configuration de décodeur SECAM selon la présente invention ;
la figure 4 représente le schéma d'un démodulateur à boucle à verrouillage de phase du décodeur de la présente invention ; et
la figure 5 représente différents signaux obtenus en différents endroits des décodeurs selon l'art antérieur et la présente invention.

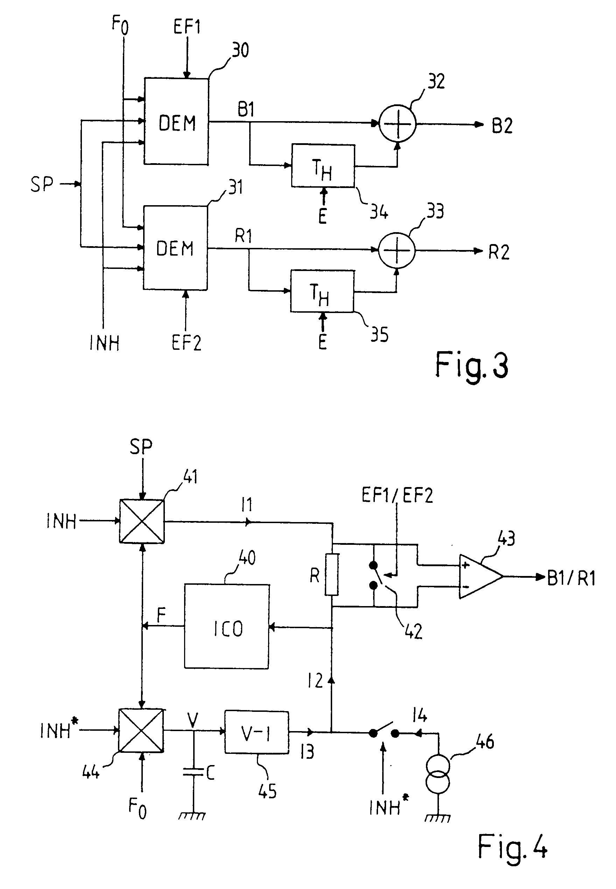

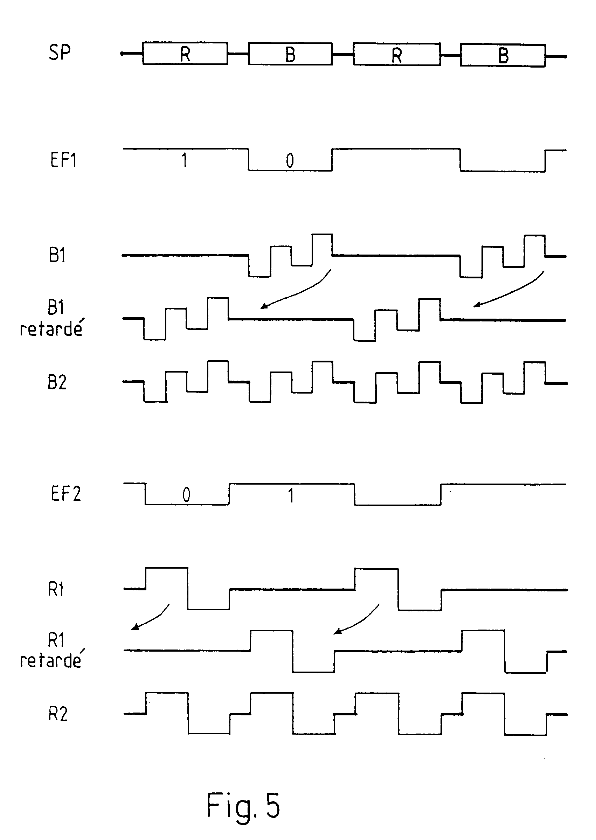

La figure 3 représente une configuration de décodeur SECAM selon la présente invention qui sera mieux comprise en combinaison avec les signaux de la figure 5. Le décodeur comprend deux démodulateurs 30 et 31 à boucle à verrouillage de phase (PLL) recevant chacun la sous-porteuse de chrominance SP, une fréquence de référence F₀ présente dans l'appareil (par exemple la fréquence PAL de 4,43 MHz dans un décodeur multistandard), un signal d'inhibition INH et respectivement des signaux d'effacement EF1 et EF2, et délivrant respectivement les signaux B1 et R1. Le démodulateur 30 démodule par exemple les lignes bleues de la sous-porteuse SP et, en réponse au signal EF1, le signal de sortie B1 est annulé pendant les intervalles ligne bleue - ligne rouge et ligne rouge - ligne bleue pour restituer le niveau du noir dans ces intervalles, et pendant toute la durée des lignes rouges. Le démodulateur 31 fonctionne de la même façon pour démoduler les lignes rouges, restituer le niveau du noir et supprimer les lignes bleues en réponse au signal EF2.

Les signaux B1 et R1 disponibles à la sortie des démodulateurs 30 et 31 correspondent à ceux de la figure 2 et sont traités de la même façon par un circuit comprenant deux sommateurs 32 et 33 et deux lignes à retard 34 et 35. Ces lignes à retard sont, par exemple, à échantillonnage ou CCD entièrement intégrables dans le circuit intégré du décodeur selon la présente invention en technologie bipolaire-CMOS (BICMOS) ; dans ce cas, on fournit à ces lignes des impulsions d'échantillonnage E. Les démodulateurs 30 et 31 sont inhibés périodiquement, par exemple pendant les retours de trame, en réponse au signal INH, pour effectuer un recalage de la fréquence de repos des démodulateurs sur la fréquence F₀.

La figure 4 représente plus en détail un démodulateur à boucle à verrouillage de phase employé dans le décodeur de la présente invention. Un oscillateur commandé en courant 40 (ICO) est asservi par deux boucles à verrouillage de phase. La première constitue le démodulateur de phase et la deuxième sert à fixer et recaler périodiquement la fréquence de repos de l'oscillateur.

La première boucle est constitué d'un comparateur de phase 41 inhibable par le signal INH, recevant la sous-porteuse SP et le signal de sortie F de l'oscillateur 40, et délivrant un courant I1 à l'entrée de commande de l'oscillateur à travers une résistance R. Aux bornes de la résistance R sont connectés un interrupteur 42 qui court-circuite la résistance R en fonction du signal EF1 (ou EF2), et un amplificateur différentiel 43 qui amplifie la tension aux bornes de la résistance R et fournit à sa sortie les signaux B1 ou R1. De préférence, l'interrupteur 42 est constitué de transistors MOS.

La deuxième boucle est constituée d'un deuxième comparateur de phase 44 inhibable par l'inverse INH* du signal INH, recevant une fréquence de référence F₀ et le signal F, et délivrant une tension V qui est stockée dans une capacité C, à un convertisseur tension-courant 45 qui fournit un courant I3 proportionnel à V à l'entrée de commande de l'oscillateur 40. Une source de courant 46 fournissant un courant constant I4 est connectée à l'entrée de commande de l'oscillateur en réponse au signal INH*.

Dans une phase de recalage pendant un retour de trame, le signal INH est au niveau logique 1, ce qui inhibe le comparateur 41 et annule le courant I1, et déconnecte la source 46. La deuxième boucle à verrouillage de phase est active et la fréquence F de l'oscillateur 40 se cale sur la fréquence F₀ en réponse au courant I3.

Lors d'une phase de démodulation en dehors des retours de trame, le signal INH passe au niveau logique 0, le comparateur 44 est inhibé, sa sortie passe en haute impédance et la tension V qui y était présente est mémorisée dans la capacité C. Ainsi, le courant I3 reste sensiblement constant jusqu'à la prochaine phase de recalage. A ce courant I3 qui fixe la fréquence de repos de l'oscillateur 40 à F₀, est superposé le courant I4 provenant de la source de courant 46 activée par le niveau logique 1 du signal INH*.

Le courant I4 est différent dans chaque démodulateur et il est tel que, quand il est superposé à I3 et en supposant I1 nul, il fixe la fréquence de repos de l'oscillateur à pratiquement la fréquence de modulation (F_{0_{B}} ou F_{0_{R}}) de la couleur concernée, qui est proche de F₀. Les valeurs de I4 sont obtenues à la fabrication car elles n'ont pas besoin d'être précises puisqu'il s'agit de simples courants de correction (dans l'exemple ci-dessus, F₀=4,43 MHz, F_{0_{B}}=4,25 MHz et F_{0_{R}}=4,406 MHz).

Lors de cette phase de démodulation, le premier comparateur de phase 41 est activé et son courant de sortie I1 s'additionne aux courants I3 et I4 à l'entrée de commande de l'oscillateur de manière que la fréquence de ce dernier se règle à la fréquence de la sous-porteuse SP. Le courant I1 traduit alors les variations de phase, qui représentent en fait les écarts en fréquence, entre la sous-porteuse SP et F. Le courant I1 est transformé en tension en passant dans la résistance R. Cette tension est amplifiée par l'amplificateur différentiel 43 qui délivre à sa sortie les signaux B1 (ou R1).

En réponse au signal d'effacement EF1 (ou EF2), la résistance R est court-circuitée par l'interrupteur 42, ce qui annule le signal de sortie B1 (ou R1) en restituant le niveau du noir.

Le signal d'effacement EF1 peut être obtenu à partir des signaux F_{H}/2 et BLK classiques précédemment mentionnés et le signal EF2 peut être obtenu à partir de l'inverse du signal F_{H}/2, et le signal BLK.

Tous les éléments décrits ci-dessus peuvent être intégrés dans un même circuit intégré en technologie BICMOS et, en particulier, les lignes à retard à échantillonnage et tous les interrupteurs utilisés y seront en technologie CMOS qui autorise une configuration très simple de ces derniers. Les courants I4 de chaque démodulateur sont obtenus par fabrication, ce qui supprime les deux réglages fastidieux de fréquence nécessaires dans les circuits de l'art antérieur.

## Revendications

1. Décodeur SECAM comprenant deux démodulateurs (30, 31) recevant une sous-porteuse de chrominance (SP) véhiculant des informations correspondant de façon alternée à une ligne bleue et à une ligne rouge, dont les sorties sont chacune reliée directement à une entrée et par l'intermédiaire d'une ligne à retard (34, 35) à une autre entrée d'un sommateur (32, 33), caractérisé en ce que les démodulateurs sont à boucle à verrouillage de phase (PLL) comprenant chacun :
- un comparateur de phase (41) recevant sur une entrée la sous-porteuse, fournissant un courant de commande (I1) à un oscillateur commandé en courant (40) et recevant sur une autre entrée le signal de sortie (F) de l'oscillateur ;
- un moyen résistif (R) disposé dans le trajet du courant de commande, aux bornes duquel est récupérée une tension représentative de la sous-porteuse démodulée ; et
- un interrupteur (42) en parallèle sur le moyen résistif, cet interrupteur étant ouvert seulement pendant le passage des lignes d'une même couleur.

2. Décodeur SECAM selon la revendication 1, caractérisé en ce que l'interrupteur (42) est commandé par un signal d'effacement (EF1, EF2) qui est à un niveau logique actif pendant les retours de ligne et les lignes correspondant à l'autre couleur.

3. Décodeur SECAM selon la revendication 1, caractérisé en ce qu'en réponse à un signal d'inhibition (INH) périodique, le courant de sortie (I1) du comparateur (41) est annulé et un courant de réglage (I2) est fourni à l'oscillateur (40).

4. Décodeur SECAM selon la revendication 1, caractérisé en ce que l'interrupteur (42) est constitué d'au moins un transistor MOS.

5. Décodeur SECAM selon la revendication 3, caractérisé en ce qu'il comprend des moyens pour :
- fournir, lorsque le signal d'inhibition (INH) est à un niveau logique prédéterminé (0), le courant de réglage (I2) ayant une première valeur (I3+I4) constante correspondant à un réglage au repos de l'oscillateur (40), et
- fournir, lorsque le signal d'inhibition (INH) passe au niveau logique complémentaire (1) du niveau logique prédéterminé (0), le courant de réglage (I2) ayant une deuxième valeur (I3) qui est fonction de la différence de phase entre le signal de sortie (F) de l'oscillateur (40) et une fréquence de référence (F₀).

6. Décodeur SECAM selon la revendication 5, caractérisé en que lesdits moyens comportent :
- un deuxième comparateur de phase (44) fournissant une tension (V) fonction de la différence de phase entre le signal de sortie (F) de l'oscillateur (40) et la fréquence de référence (F₀), et recevant le signal d'inhibition (INH) dont le niveau logique complémentaire (1) provoque la suppression de la tension (V) ;
- un convertisseur tension-courant (45) transformant la tension (V) en un deuxième courant (I3) de commande de l'oscillateur (40) ;
- des moyens (C, 45) pour mémoriser le deuxième courant de commande (I3) et ;
- une source de courant (46) fournissant un courant constant (I4) qui commande l'oscillateur (40) quand le signal d'inhibition (INH) est au niveau logique prédéterminé (0).

7. Décodeur SECAM selon la revendication 5, caractérisé en ce que les moyens pour mémoriser le deuxième courant de commande (I3) comprennent :
- une capacité (C) reliée entre la sortie du deuxième comparateur et la masse ; et
- un convertisseur tension-courant (45) connecté entre la sortie du deuxième comparateur (44) et l'entrée de commande de l'oscillateur (40).

8. Décodeur SECAM selon la revendication 5, caractérisé en ce que le signal d'inhibition (INH) passe au niveau logique complémentaire (1) pendant les retours de trame.

## Claims

1. A SECAM decoder comprising two demodulators (30, 31) receiving a chrominance subcarrier (SP) carrying information corresponding alternatively to a blue line and a red line, the outputs of which are each connected directly to an input and through a delay-line (34, 35) to another input of an adder (32, 33), characterized in that each demodulator is a phase-locked-loop (PLL) demodulator comprising:
- a phase comparator (41) receiving at an input the subcarrier, delivering a control current (I1) to a current controlled oscillator (40) and receiving at another input the output signal (F) of the oscillator;
- a resistive means (R) placed in the controlled current path, across which a voltage representative of the demodulated subcarrier is tapped; and
- a switch (42) connected in parallel to the resistive means, this switch being opened only during lines of a same color.

2. A SECAM decoder as claimed in claim 1, characterized in that the switch (42) is controlled by a blanking signal (EF1, EF2) which is at an active level during the line retrace periods and the lines corresponding to the other color.

3. A SECAM decoder as claimed in claim 1, characterized in that, in response to a periodic inhibition signal (INH), the output current (I1) of the comparator (41) is cancelled and an adjustment current (I2) is provided to the oscillator (40).

4. A SECAM decoder as claimed in claim 1, characterized in that the switch (42) is comprised of at least one MOS transistor.

5. A SECAM decoder as claimed in claim 3, characterized in that it comprises means for:
- providing, when the inhibition signal (INH) is at a predetermined level (0), the adjustment current having a first constant value (I3 + I4) corresponding to an idle adjustment of the oscillator (40), and
- providing, when the inhibition signal (INH) assumes the complementary (1) of the predetermined logic state, the adjustment current (I2) having a second value (I3) which is a function of the phase difference between the output signal (F) of the oscillator (40) and a reference frequency (F₀).

6. A SECAM decoder as claimed in claim 5, characterized in that said means comprise:
- a second phase comparator (44) providing a voltage (V) which is a function of the phase difference between the output signal (F) of the oscillator (40) and the reference frequency (F₀), and receiving the inhibition signal (INH) of which the complementary state (1) cancels the voltage (V);
- a voltage-to-current converter (45) converting the voltage (V) in a second control current (I3) of the oscillator (40);
- means (C, 45) for storing the second control current (I3); and
- a current source (46) providing a constant current (I4) which controls the oscillator (40) when the inhibition signal (INH) is at a predetermined state (0).

7. A SECAM decoder as claimed in claim 5, characterized in that the means for storing the second control current (I3) comprise:
- a capacity (C) connected between the output of the second comparator and ground; and
- a voltage-to-current converter (45) connected between the output of the second comparator (44) and the control input of the oscillator (40).

8. A SECAM decoder as claimed in claim 5, characterized in that the inhibition signal assumes the complementary state (1) during the frame retrace periods.

## Patentansprüche

1. SECAM-Dekoder mit zwei Demodulatoren (30, 31), welchen einen Chrominanz-Hilfsträger (SP) empfangen, der Information überträgt, welche alternativ einer blauen Zeile und einer roten Zeile entspricht, wobei die Ausgänge der Demodulatoren jeweils direkt mit einem Eingang und über eine Verzögerungsleitung (34, 35) mit einem anderen Eingang eines Addierers (32, 33) verbunden sind, dadurch gekennzeichnet, daß jeder Demodulator ein phasenstarrer (PLL)-Demodulator ist und folgende Merkmale aufweist:
einen Phasenvergleicher (41), der an einem Eingang den Hilfsträger empfängt, einen Steuerstrom (I1) an einen stromgesteuerten Oszillator (40) abgibt und an einem anderen Eingang das Ausgangssignal (F) des Oszillators empfängt,
ein ohmsches Element (R), das in den gesteuerten Strompfad eingefügt ist und über dem eine Spannung abgegriffen wird, welche repräsentativ für den demodulierten Hilfsträger ist, und
einen Schalter (42), der parallel zu dem ohmschen Element geschaltet ist, wobei dieser Schalter nur während Zeilen derselben Farbe geöffnet wird.

2. SECAM-Dekoder nach Anspruch 1, dadurch gekennzeichnet, daß der Schalter (42) durch ein Austastsignal (EF1, EF2) gesteuert wird, welches während der Zeilenrücklauf-Perioden und während der Zeilen, die der anderen Farbe entsprechen, auf einem aktiven Pegel ist.

3. SECAM-Dekoder nach Anspruch 1, dadurch gekennzeichnet, daß abhängig von einem periodischen Sperrsignal (INH) der Ausgangsstrom (I1) des Vergleichers (41) unterdrückt wird und ein Einstellstrom (I2) am Oszillator (40) vorgesehen wird.

4. SECAM-Dekoder nach Anspruch 1, dadurch gekennzeichnet, daß der Schalter (42) mindestens einen MOS-Transistor aufweist.

5. SECAM-Dekoder nach Anspruch 3, dadurch gekennzeichnet, daß er eine Vorrichtung zum
Vorsehen des Einstellstromes mit einem ersten konstanten Wert (I3 + I2), der einer Einstellung des Oszillators (40) auf den Ruhezustand entspricht, wenn das Sperrsignal (INH) auf einem vorgegebenen Wert (0) ist, und zum Vorsehen des Einstellstromes (I2) mit einem zweiten Wert (I3), der eine Funktion der Phasendifferenz zwischen dem Ausgangssignal (F) des Oszillators (40) und einer Bezugsfrequenz (F₀) ist, wenn das Sperrsignal (INH) das Komplement (1) des vorgegebenen logischen Zustandes annimmt, aufweist.

6. SECAM-Dekoder nach Anspruch 5, dadurch gekennzeichnet, daß diese Vorrichtung folgende Merkmale aufweist:
einen zweiten Phasenvergleicher (44), der eine Spannung (V) vorsieht, die eine Funktion der Phasendifferenz zwischen dem Ausgangssignal (F) des Oszillators (40) und der Bezugsfrequenz (F₀) ist, und das Sperrsignal (INH) empfängt, dessen komplementärer Zustand (1) die Spannung (V) unterdrückt,
einen Spannungs-Strom-Wandler (45), der die Spannung (V) in einen zweiten Steuerstrom (I3) des Oszillators (40) umwandelt,
eine Vorrichtung (C, 45) zum Speichern des zweiten Steuerstromes (I3) und
eine Stromquelle (46), welche einen konstanten Strom (I4) vorsieht, der den Oszillator (40) steuert, wenn das Sperrsignal (INH) auf dem vorgegebenen Pegel (0) ist.

7. SECAM-Dekoder nach Anspruch 5, dadurch gekennzeichnet, daß die Vorrichtung zum Speichern des zweiten Steuerstromes (I3) folgende Merkmale aufweist:
eine Kapazität (C), die zwischen dem Ausgang des zweiten Vergleichers und Masse angeschlossen ist, und
einen Spannungs-Strom-Wandler (45), der zwischen dem Ausgang des zweiten Vergleichers (44) und dem Steuereingang des Oszillators (40) angeschlossen ist.

8. SECAM-Dekoder nach Anspruch 5, dadurch gekennzeichnet, daß das Sperrsignal während der Bildrücklaufperioden auf den komplementären logischen Pegel (1) geht.
